**Europäisches Patentamt**

**European Patent Office**

**Office européen des brevets**

(19)

(11) Publication number : **0 362 265 B1**

(12) # EUROPEAN PATENT SPECIFICATION

(45) Date of publication of patent specification :
02.09.92 Bulletin 92/36

(51) Int. Cl.⁵ : **A01J 7/00**

(21) Application number : **88905027.4**

(22) Date of filing : **24.05.88**

(86) International application number :
**PCT/SE88/00272**

(87) International publication number :
**WO 88/09117 01.12.88 Gazette 88/26**

(54) **TIE STALLS MILKING PLANT.**

The file contains technical information
submitted after the application was filed and
not included in this specification

(30) Priority : **27.05.87 SE 8702256**

(43) Date of publication of application :
**11.04.90 Bulletin 90/15**

(45) Publication of the grant of the patent :
**02.09.92 Bulletin 92/36**

(84) Designated Contracting States :
**AT BE CH DE FR GB IT LI LU NL SE**

(56) References cited :
DE-A- 929 398
FR-A- 1 486 021
GB-A- 1 514 686
SE-A- 82 220
SE-A- 429 709

(73) Proprietor : **ALFA-LAVAL AGRI SCANDINAVIA
AB
Box 618
S-151 27 Södertälje (SE)**

(72) Inventor : **Andersson, Gösta
Byvägen 76
S-151 52 Södertälje (SE)**
Inventor : **Rönnqvist, Bernt
Granövägen 54
S-151 64 Södertälje (SE)**
Inventor : **Andersson, Bo
Ekvägen 29
S-147 00 Tumba (SE)**

(74) Representative : **Lerwill, John et al
A.A. Thornton & Co. Northumberland House
303-306 High Holborn
London, WC1V 7LE (GB)**

Note : Within nine months from the publication of the mention of the grant of the European patent, any
person may give notice to the European Patent Office of opposition to the European patent granted.
Notice of opposition shall be filed in a written reasoned statement. It shall not be deemed to have been
filed until the opposition fee has been paid (Art. 99(1) European patent convention).

## Description

The present invention concerns cowshed milking plants, and in particular relates to such plants wherein the cowshed has tie stalls and the plant includes a stationary conveyor rail extending substantially horizontally above the cowshed floor and along each stall, and at least one stiff elongated carrier suspended substantially vertically from the conveyor rail and adapted to carry milking equipment along the conveyor rail to milking positions at the respective stalls.

A known milking plant as described above has been developed primarily to eliminate heavy manual transport from cow to cow of a milking equipment, such as a milking device comprising teat cups, claw and hoses connected thereto. Instead of carrying the milking device between the cows, the milker only has to pull the carrier to establish movement of the milking device between the milking positions.

A further advantage with the known milking plant is that the carrier also can be used to support a more comprehensive and heavier milking equipment, which normally is impossible to carry manually between the cows, making possible further automation of milking of tied up cows. For instance, such comprehensive milking equipment can comprise two milking devices, two automatic teat cup removers, a stool for the milker and auxiliary equipment, such as disposable paper, paper basket and checking receptacle.

A weak point in the design of the known milking plant is the sensitive suspension of the carrier in the conveyor rail. Since the conveyor rails and the carrier for economical reasons have to be designed with a relatively yielding construction, the carrier has to be able to swing relatively freely around its point of suspension, at least in a direction perpendicular to the conveyor rail, to avoid damaging stresses in the carrier and the conveyor rail. Such damaging stresses can be caused by movement of inertia, which arises upon swinging of the heavy milking equipment. This results in the disadvantage that the milker has difficulty in using a stool arranged on the carrier, since the carrier easily swings away from the milker when he tries to sit down on the stool. The result might be that the milker, to gain time, does not bother about the stool but kneels uncomfortably at the cow while mounting the milking device, which means that there is a risk for that the milker in time will suffer physical damage such as worn out limbs.

The present invention seeks to remove the described disadvantages of the known milking plant.

In accordance with the invention there is provided a cowshed milking plant as initially described, characterised in that means is arranged for fixing the lower end of the carrier relative to the cowsched floor, when the carrier is at any of said milking positions.

Hereby the milker without difficulty and with both hands free for handling the milking device, can sit down on a stool mounted on the carrier when this is fixed relative to the floor, without risk that the stool will swing away. The stool can be displaceably connected to the carrier, so that the stool can be displaced from an inoperative position close to the carrier to an operative position at a greater distance from the carrier and closer to the cow, which is to be milked.

The ability to fix the carrier at the respective milking positions also makes it possible to connect displaceable hanging hooks for the milking device to the carrier. Each such hanging hook might for instance be arranged so that when the carrier is fixed in position it is displaceable from an inoperative position to an operative position at a distance from the carrier, in which operative position the milking device is located just behind the front legs of the cow.

Advantageously the stool can be so arranged on the carrier that when the stool is displaced by the milker from its inoperative position to its operative position, said fixing means is actuated simultaneously to fix the carrier with respect to the floor, and when the stool is moved back to its inoperative position said fastening means is influenced to release the carrier from the floor.

In corresponding manner the stool also can be so connected to said hanging hooks that when the stool is displaced by the milker from its inoperative position to its operative position, the hanging hooks are moved from their inoperative positions to their operative positions and vice versa.

Preferably said fixing means comprises floor elements at the respective milking positions, and an engagement member arranged on the carrier and engageable with the respective floor element when the carrier is located at one of the milking positions.

Alternatively, the fixing means can comprise an engagement member arranged on the carrier and displaceable between an upper inoperable position and a lower operable position in which the engagement member is arranged to be pressed against the floor for friction engagement therewith.

In the following description some embodiments of the invention are explained in more detail with reference to the accompanying drawings, in which:-

Figures 1 and 2 show a carrier according to one embodiment of a milking plant according to the invention;

Figures 3 and 4 show details of the carrier and fixing means according to another embodiment of the invention; and

Figures 5 and 6 show details of the carrier and fixing means of a further embodiment of the invention.

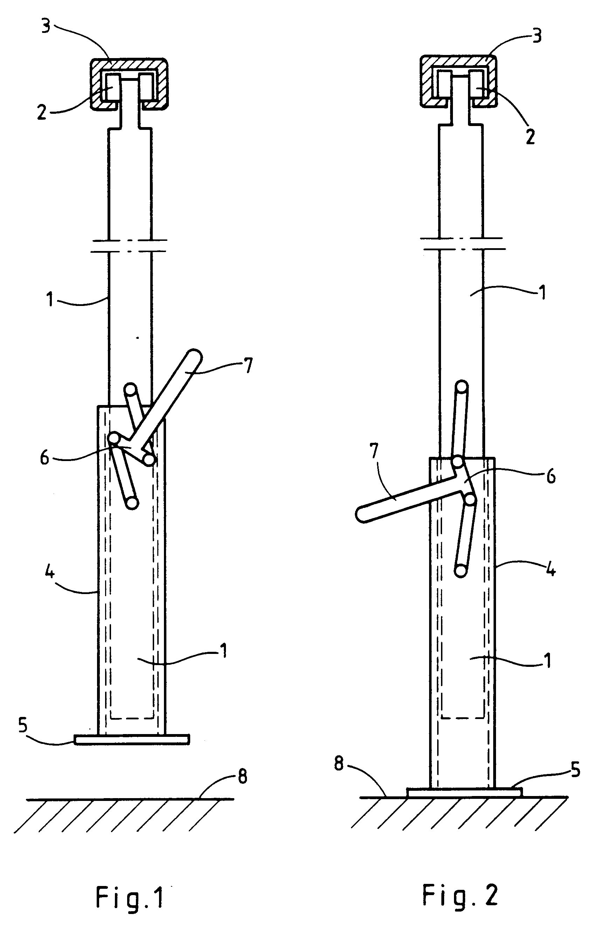

In Figure 1 there is shown a carrier in the form of a rod 1 provided at its upper end with rolls 2 which are engaged in a conveyor rail 3 having a U-shaped cross section, so that the rod 1 is suspended from and movable along the conveyor rail 3. A sleeve-shaped engagement member 4 provided with a bottom plate 5 is telescoped on a lower part of the rod 1. An operating device 6 comprising a link system interconnects the rod 1 and the engagement member 4. The operating device is arranged upon pivoting of a handle 7, to move the engagement member 4 relative to the rod 1 between an upper position, in which the engagement member 4 is locked to the rod 1 (Fig. 1), and a lower position, in which the bottom plate 5 of the fastening means is pressed down in frictional engagement with the floor 8 (Fig. 2).

If required, a spring can be arranged between the engagement member 4 and the rod 1, to increase the frictional engagement between the bottom plate 5 and the floor 8 when the engagement member 4 is actuated.

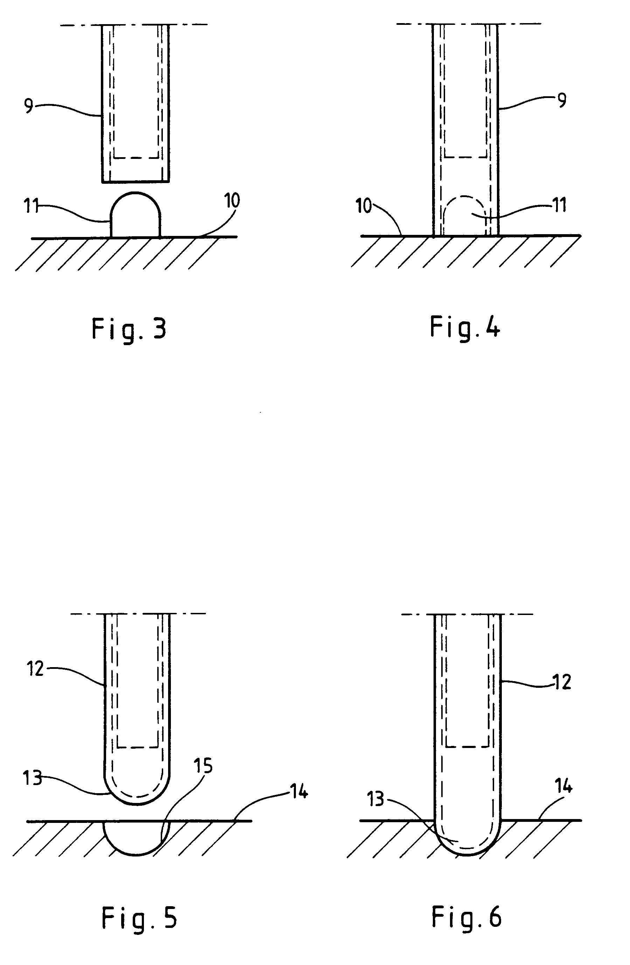

In Figure 3 and 4 there is shown a detail of another embodiment comprising a sleeve-shaped engagement member 9, which is engageable with a separate elements or members mounted on the floor 10. The floor members are pins extending upwardly from the floor and is insertable in a lower part of the engagement member 9 (Fig. 4).

In Figure 5 and 6 there is shown a detail of further embodiment comprising an engagement member 12, the lower end of which is shaped to define a domed or hemispherical tappet 13. The floor 14 is provided with an indentation 15, into which the tappet 13 is insertable (Fig. 6).

Alternatively, the carrier and the fastening member according to anyone of the shown embodiments of the new milking plant can be designed such that the carrier can be telescoped over the engagement member. In this case the carrier may be a tube and the engagement member can comprise a rod which is insertable into the tube.

Instead of a mechanical setting of the position of the fastening member relative to the carrier by means of a mechanical device such as the operating device shown in Figure 1 and 2, said setting can be accomplished alternatively by any suitable hydraulic device, which can be arranged for operation by means of a foot pedal.

## Claims

1. A cowshed milking plant comprising a cowshed having tie stalls an a milking plant comprising a stationary conveyor rail (3) arranged to extend substantially horizontally above the cowshed floor (8-10) and along each stall, and at least one stiff elongated carrier (1) suspended from the conveyor rail (3) and displaceable therealong, the carrier extending substantially vertically from the conveyor rail (3) towards the cowshed floor and being adapted for carrying milking equipment along the conveyor rail (3) to milking positions at the respective stalls, characterised in that means (4; 9, 11; 13, 15) is arranged for fixing the lower end of the carrier (1) relative to the cowshed floor (8-10), when the carrier is at any of said milking positions.

2. A cowshed milking plant according to claim 1, wherein said fixing means comprises stationary cowshed floor elements (11, 15) located at the respective milking positions, and an engagement member (9,12) arranged on the carrier (1) for engagement with the respective cowshed floor element when the carrier is at one of the milking positions.

3. A cowshed milking plant according to claim 2, wherein the engagement member (9, 12) is displaceable relative to the carrier (1) between an upper inoperable position and a lower operable position in which the engagement member (9, 12) is engageable with the cowshed floor elements (11, 15).

4. A cowshed milking plant according to claim 3, wherein the engagement member is a sleeve (9) threaded on the carrier (1), and each cowshed floor element comprises a pin (11) extending upwardly from the cowshed floor, the pin projecting into the sleeve (9) when the latter is lowered into engagement with the pin (11).

5. A cowshed milking plant according to claim 3, wherein the engagement member (12) has a downwardly directed pin (13), at its lower end and each cowshed floor element defines an indentation (15) in the cowshed floor (14), said pin (13) of the engagement member (12) extending into the indentation (15) when the engagement member (12) is lowered into engagement with the cowshed floor element.

6. A cowshed milking plant according to claim 1, wherein said fixing means comprises an engagement member (4) arranged on the carrier (1) and displaceable relative thereto between an upper inoperable position and a lower operable position in which the engagement member is pressed against the cowshed floor (8) surface with friction engagement therewith.

7. A cowshed milking plant according to claim 6, wherein the engagement member (4) is sleeve-shaped and is telescoped on the carrier (1).

## Patentansprüche

1. Kuhstall-Melkanlage mit einem Kuhstall mit Anbindeständen und einer Melkanlage, die eine stationäre Führungsschiene (3), die sich im wesentlichen horizontal oberhalb des Kuhstallbodens (8-10) und entlang jeden Standes erstreckt, und wenigstens einen steifen langgestreckten Träger (1) umfaßt, der von der Führungsschiene (3) herabhängt und entlang dieser verschieblich ist, wobei der Träger sich im wesentlichen vertikal von der Führungsschiene (3) in Richtung auf den Kuhstallboden erstreckt und dazu eingerichtet ist, die Melkausrüstung entlang der Führungsschiene (3) zu den Melkpositionen an den jeweiligen Ständen zu tragen, dadurch gekennzeichnet, daß Mittel (4; 9, 11; 13, 15) angeordnet sind zum Fixieren des unteren Endes des Trägers (1) im Verhältnis zu dem Kuhstallboden (8-10), wenn der Träger sich an einer der Melkpositionen befindet.

2. Kuhstall-Melkanlage nach Anspruch 1, bei der die Fixiermittel stationäre Kuhstall-Bodenelemente (11, 15), die an den jeweiligen Melkpositionen angeordnet sind, und ein Eingriffsteil (9, 12) umfassen, welches auf dem Träger (1) zum Eingriff mit dem jeweiligen Kuhstall-Bodenelement eingerichtet ist, wenn der Träger sich an einer der Melkpositionen befindet.

3. Kuhstall-Melkanlage nach Anspruch 2, bei der das Eingriffsteil (9, 12) relativ zu dem Träger (1) verschieblich ist zwischen einer oberen Ruhestellung und einer unteren Betriebsstellung, in der das Eingriffsteil (9, 12) in Eingriff ist mit den Kuhstall-Bodenelementen (11, 15).

4. Kuhstall-Melkanlage nach Anspruch 3, bei der das Eingriffsteil eine Hülse (9) ist, die auf den Träger (1) aufgeschoben ist, und jedes Kuhstall-Bodenelement einen Stift (11) aufweist, der von dem Kuhstallboden nach oben aufragt, wobei der Stift in die Hülse (9) vorsteht, wenn letztere in Eingriff mit dem Stift (11) abgesenkt worden ist.

5. Kuhstall-Melkanlage nach Anspruch 3, bei der das Eingriffsteil (12) einen nach abwärts gerichteten Stift (13) an seinem unteren Ende hat und jedes Kuhstall-Bodenelement eine Vertiefung (15) in dem Kuhstallboden (14) definiert, wobei der Stift (13) des Eingriffsteils (12) sich in die Vertiefung (15) hinein erstreckt, wenn das Eingriffsteil (12) in Eingriff mit dem Kuhstall-Bodenelement abgesenkt worden ist.

6. Kuhstall-Melkanlage nach Anspruch 1, bei der das Fixiermittel ein Eingriffsteil (4) umfaßt, das an dem Träger (1) angeordnet und relativ dazu verschieblich ist zwischen einer oberen Ruhestellung und einer unteren Betriebsstellung, in der das Eingriffsteil gegen die Oberfläche des Kuhstallbodens (8) in Reibeingriff damit gepreßt wird.

7. Kuhstall-Melkanlage nach Anspruch 6, bei der das Eingriffsteil (4) hülsenförmig ist und über den Träger (1) übergeschoben ist.

**Revendications**

1. Installation de traite en étable constitué par une étable ayant des stalles ou boxes dans lesquels sont attachées les vaches et une installation de traite comprenant un rail de convoyeur fixe (3) disposé de façon à s'étendre sensiblement de façon horizontale au-dessus du plancher de l'étable (8-10) et le long de chaque stalle ou boxe, et au moins un élément porteur allongé rigide (1) accroché au rail du convoyeur (3) et pouvant se déplacer le long de celui-ci, l'élément porteur s'étendant sensiblement de façon verticale à partir du rail du convoyeur (3) en direction du plancher de l'étable et pouvant transporter les équipements de traite le long du rail du convoyeur (3) vers les positions de traite aux stalles ou boxes respectifs, caractérisée en ce que des moyens (4 ; 9, 11 ; 13, 15) sont disposés pour la fixation de l'extrémité inférieure de l'élément porteur (1) par rapport au plancher de l'étable (8-10) lorsque le élément porteur se situe sur l'une quelconque des positions de traite.

2. Installation de traite en étable selon la revendication 1, dans laquelle des moyens de fixation comprennent des éléments de plancher d'étable fixes (11, 15) situés sur les positions de traite respectives et un élément d'engagement (9, 12) disposé sur l'élément porteur (1) pour l'engagement avec l'élément de plancher d'étable respectif lorsque l'élément porteur se situe sur l'une des positions de traite.

3. Installation de traite en étable selon la revendication 2, dans laquelle l'élément d'engagement (9, 12) peut se déplacer par rapport à l'élément porteur (1) entre une position inopérante supérieure et une position opérante inférieure dans laquelle l'élément d'engagement (9, 12) peut être engagé avec des éléments de plancher de l'étable (11, 15).

4. Installation de traite en étable selon la revendication 3, dans laquelle l'élément d'engagement est un manchon (9) fixé par vissage sur l'élément porteur (1) et chaque élément de plancher d'étable comprend un axe (11) s'étendant vers le haut à partir du plancher d'étable, l'axe faisant saillie dans le manchon (9) lorsque ce dernier est abaissé en engagement avec l'axe (11).

5. Installation de traite en étable selon la revendication 3, dans laquelle l'élément d'engagement (12) comporte un axe dirigé vers le bas (13) sur son extrémité inférieure et chaque élément de plancher d'étable définit un évidement (15) dans le plancher d'étable (14), l'axe (13) de l'élément d'engagement (12) s'étendant dans l'évidement (15) lorsque l'élément d'engagement (12) est abaissé en engagement avec l'élément de plancher d'étable.

6. Installation de traite en étable selon la revendication 1, dans laquelle les moyens de fixation comprennent un élément d'engagement (4) disposé sur l'élément porteur (1) et pouvant se déplacer par rapport à celui-ci entre une position inopérante supérieure et une position opérante inférieure dans laquelle l'élément d'engagement est comprimé contre la surface du plancher d'étable (8) pour son engagement par friction avec celui-ci.

7. Installation de traite en étable selon la revendication 6, dans laquelle l'élément d'engagement (4) est en forme de manchon et il est monté télescopiquement sur l'élément porteur (1).

Fig.1

Fig.2

Fig. 3

Fig. 4

Fig. 5

Fig. 6